# EUROPEAN PATENT APPLICATION

(11) **EP 0 756 105 A1**
(43) Date of publication of application: **29.01.1997**
(21) Application number: 96111541.7
(22) Date of filing: 17.07.1996
(51) Int. Cl.: F16F 15/123

(54) **Plate member for a damper disc assembly**

(30) Priority: 24.07.1995 JP 187035/95
(71) Applicant: EXEDY CORPORATION, Neyagawa-shi, Osaka 572 (JP)
(72) Inventor: Takehira, Yasushi, Kobe-shi, Hyogo-ken (JP); Teramae, Hiroshi, Nara-shi, Nara-ken (JP); Yoshimoto, Takuya, Katano-shi, Osaka (JP)
(74) Representative: Weber, Joachim, Dr.

(57) **Abstract**

To suppress the deflection in a radially outward direction of a coil spring upon compression thereof and to ensure optimal spring characteristics, a sub-plate (5) is used in a clutch disc assembly for transmitting a torque through large coil springs (7). Window holes (5b) are formed in the sub-plate (5) for receiving the large coil springs (7). A linear edge (32) is formed in an intermediate portion in the circumferential direction of an outer circumferential edge of each window hole (5b) punched out for limiting a radially outward deflection of each large coil spring (7) upon the compression.

## Description

### BACKGROUND OF THE INVENTION

### 1. Field of the Invention

The present invention relates to a damper disc assembly used in, for instance, a clutch disc mechanism, and more particularly, a plate member in the a damper disc assembly having a window hole formed therein for a coil spring, the window hole having a spring deflecting portion.

### 2. Description of the Related Art

For instance, a clutch disc assembly used in an automotive clutch includes a disc-like input plate, an output hub having a flange on its outer circumference in a one-piece manner, and coil springs disposed for limiting a relative rotation between the two components. Window holes formed by punching are provided in the flange for receiving the coil springs. The respective window holes have an arcuate peripheral edge. The coil springs are contacted at both ends in the circumferential direction with the edges of the window holes. Also, support portions are formed in the input plate for supporting both ends in the circumferential direction of the coil springs. Thus, when the input plate is rotated, the torque is transmitted through the coil springs to the hub.

When the twist vibration is generated during the torque transmission, the plate and the hub are rotated relative to each other and the coil springs are compressed between the two components.

In the conventional clutch disc assembly, in order to obtain a large twist angle, the set length of the coil springs is maximized. For this reason, the coil springs are likely to be deflected radially outwardly when they are compressed. When the coil springs are deflected radially outwardly, it is impossible to reliably ensure the desired characteristics will be maintained throughout the life of the device.

### SUMMARY OF THE INVENTION

An object of the present invention is to suppress the deflection of the elastic member in the radial outward direction during the compression of the elastic member and to ensure desired characteristics.

In accordance with one aspect of the present invention, a damper disc assembly for use in a torque transmitting device includes a first plate member having a window hole formed therein. The window hole is formed in a circumferentially intermediate portion of the first plate member with a spring deflection limiting portion. An annular flange member is formed with a second window hole. An elastic member is disposed in the window hole and the second window hole elastically couples the first plate member and the elastic member. In response to relative rotational displacement between the first plate and the annular flange member, the elastic member is compressed and the spring deflection limiting portion limits radially outward deflection of the elastic member.

Preferably, a radial outer portion of the window hole is formed with arcuate edges adjacent to each opposing circumferential end thereof, and the deflection limiting portion is formed between the arcuate edges.

Preferably, the deflection limiting portion is a linear edge of the window hole extending between the arcuate edges.

Alternatively, the deflection limiting portion is a radially inwardly extending projection which is formed between the arcuate edges.

Preferably, a width of the projection gradually decreases from the arcuate edges toward a center thereof.

Preferably, the damper disc assembly further includes a second plate member disposed adjacent to the annular flange member such that the first plate member and the second plate member are on opposite sides of the annular flange member. Preferably, the second plate member is also formed with a window hole therein, the window hole being formed in a circumferentially intermediate portion thereof with a spring deflection limiting portion.

According to the present invention, the radially outward deflection of the compressed elastic member is limited by presence of the deflection limiting portion. In the damper disc assembly in accordance with the present invention, it is possible to ensure a generally consistent response from a spring used in a damper disc assembly.

### BRIEF DESCRIPTION OF THE DRAWINGS

In the accompanying drawings:
Fig. 1 is a side schematic cross-sectional view showing a clutch disc assembly in accordance with one embodiment of the present invention;
Fig. 2 is a part elevation, part cut-away view looking in the direction of the arrow II in Fig. 1;
Fig. 3 is an elevational view showing a hub, with features shown in phantom, shown removed from the clutch disc assembly depicted in Figs. 1 and 2;
Fig. 4 is a side cross-sectional view of the hub taken along the line IV-IV in Fig. 3 looking in the direction of the arrows;
Fig. 5 is a fragmentary cross-sectional view of a portion of the clutch disc assembly depicted in Fig. 1, shown on a slightly enlarged scale;
Fig. 6 is a plan view of a first friction washer, shown removed from the clutch disc assembly depicted in Figs. 1 and 2;
Fig. 7 is a cross-sectional view of the first friction washer taken along the line VII-VII in Fig. 6, looking in the direction of the arrows;
Fig. 8 is a plan view of a second friction washer shown removed from the clutch disc assembly depicted in Figs. 1 and 2;
Fig. 9 is a cross-sectional view of the second friction washer taken along the line IX-IX in Fig. 8, looking in the direction of the arrows;
Fig. 10 is a cross-sectional view of the second friction washer taken along the line X-X in Fig. 8, looking in the direction of the arrows;
Fig. 11 is a fragmentary, part elevation, part cross-sectional view of a portion of Fig. 2, showing a portion of the clutch disc assembly including a window hole having a coil spring disposed therein;
Fig. 12 is a fragmentary, part elevation, part cross-sectional view similar to Fig. 11, showing coil spring in a compressed state;
Fig. 13 is a fragmentary, part elevation, part cross-sectional view similar to Fig. 11, showing an alternate embodiment of the present invention; and
Fig. 14 is a fragmentary, part elevation, part cross-sectional view similar to Fig. 12, showing the alternate embodiment depicted in Fig. 13, with the coil spring in a compressed state.

### DESCRIPTION OF THE PREFERRED EMBODIMENTS

The present invention will now be described with reference to the accompanying drawings.

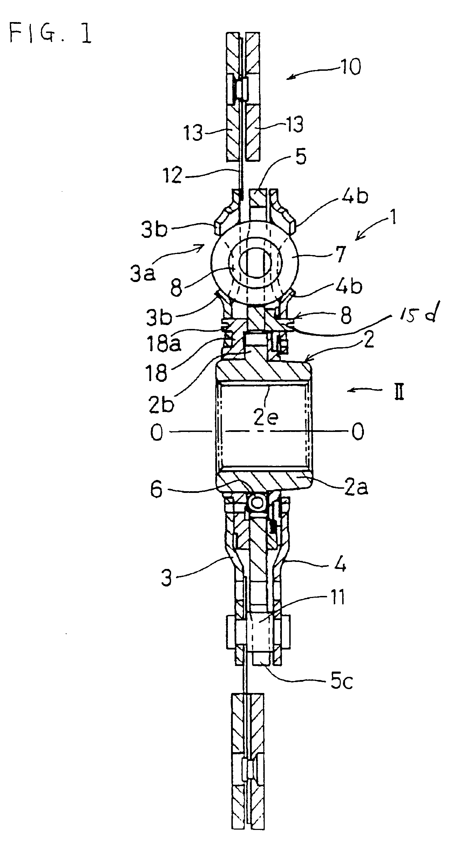

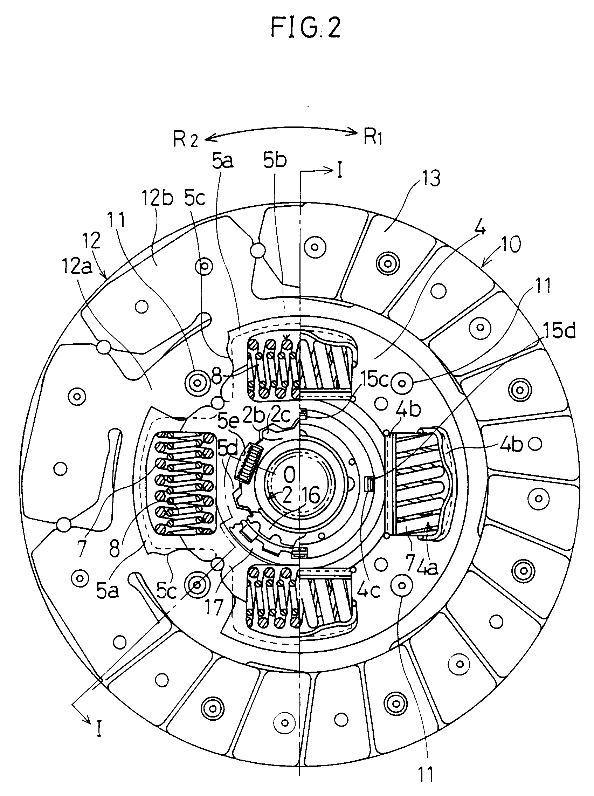

Fig. 1 shows a clutch disc assembly 1 according to a first embodiment of the invention. The assembly 1 is used for transmitting a torque from an engine (not shown) disposed on the left in Fig. 1 to a transmission (not shown) disposed on the right in Fig. 1, and is employed in a clutch mechanism (not shown) for selectively interrupting the torque transmission therebetween. In Fig. 1, line O-O designates a rotary axis of the clutch disc assembly 1. The forward rotation direction is indicated by the arrow R2 shown in Fig. 2. Further, looking at Fig. 1, to the left of the assembly 1 will hereinafter be referred to as the engine side and to the right of the assembly 1 will be referred to hereinafter as the transmission side.

The clutch disc assembly 1 is mainly composed of a hub 2 serving as an output member, a clutch plate 3 and a retaining plate 4 together serving as an input member, a sub-plate 5 serving as an intermediate member, small coil springs 6 interposed between the sub-plate 5 and the hub 2 for limiting a relative rotation therebetween, large coil springs 7 interposed between the plates 3 and 4 and the sub-plate 5 for limiting a relative rotation therebetween, and a friction resistance generating mechanism 8 for generating a predetermined friction when a relative rotation is generated between the plates 3 and 4 and the hub 2.

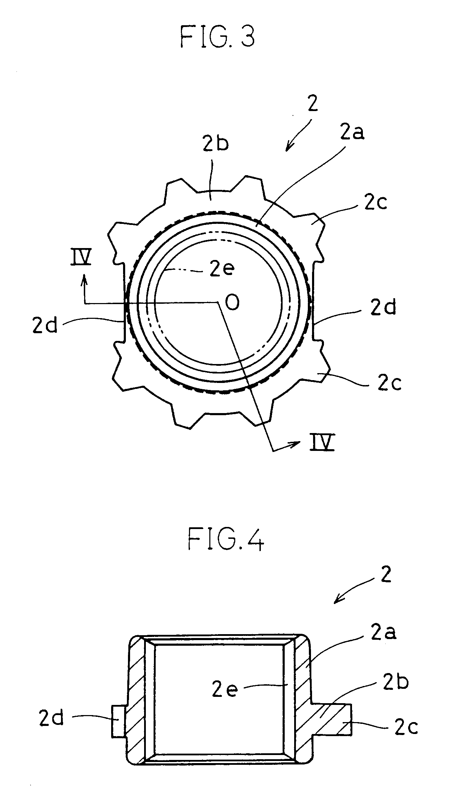

The hub 2 is disposed along a centerline of the clutch disc assembly 1 and is coupled with a shaft (not shown) of the transmission (not shown). The hub 2 is composed of a cylindrical boss 2a extending in the axial direction and a flange 2b formed integrally with an outer circumference of the boss 2a. A plurality of projections 2c are formed at an equal interval in the circumferential direction on the outer circumference of the flange 2b. As shown in Fig. 3, cutaways 2d are formed at two diametrically opposite positions for receiving both ends, in the circumferential direction, of the small coil springs 6 to be described later. Also, a spline hole 2e is formed at the central portion of an inner side of the boss 2a to be spline engaged with the shaft (not shown) of the transmission.

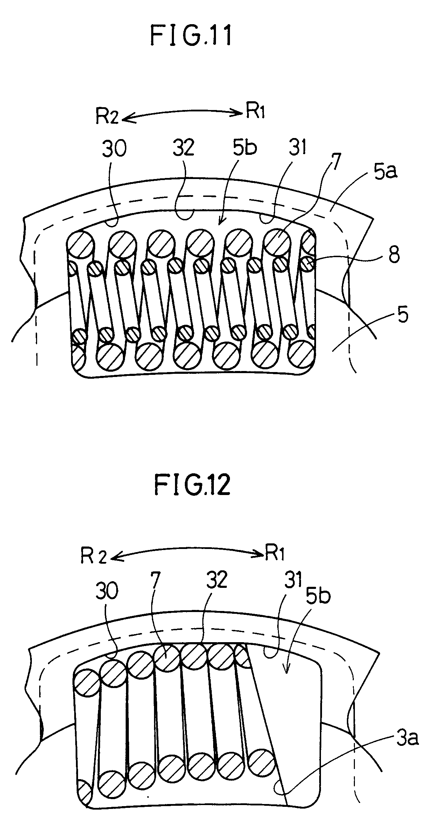

The sub-plate 5 is disposed on the outer circumference of the flange 2b of the hub 2. The sub-plate 5 may be made of a disc-shaped plate. As shown in Fig. 2, the sub-plate 5 has four projections 5a extending radially outwardly. Window holes 5b extending in the circumferential direction are formed in the respective projections 5a. As best shown in Fig. 11, arcuate edges 30 and 31 are formed on opposite circumferential sides of the outer peripheral edges of the window holes 5b. A linear edge 32 of the window holes 5b is formed between the arcuate edges 30 and 31.

As shown in Fig. 2, an outer cutaway 5c is formed between the each adjacent projections 5a. Inner projections 5d are formed corresponding to each portion between the projections 2c of the hub 2 on the inner circumferential side of the sub-plate 5. A predetermined gap is defined between each projection 2c and inner projection 5d in the circumferential direction. Thus, the hub 2 and the sub-plate 5 are rotatable through a predetermined angle that is defined by the size of the predetermined gap.

Inner cutaways 5e are formed at two positions corresponding to cutaways 2d of the hub 2 on the inner circumferential side of the sub-plate 5. The small coil springs 6 are disposed within these cutaways 2d and the inner cutaways 5e. Seat members 6a are disposed at both ends of each small coil spring 6. The seat members 6a are in contact with both ends in the circumferential direction of side portions of the cutaways 2d and the inner cutaways 5e. Incidentally, in a neutral condition shown in Fig. 2, the projections 2c are disposed on the R2 side (opposite rotational direction to the forward rotation) between the inner projections 5d.

The clutch plate 3 and retaining plate 4 are disposed on opposite sides of the sub-plate 5. The clutch plate 3 and the retaining plate 4 are generally a pair of disc members fitted around the outer circumference of the boss 2a of the hub 2 to be rotatable with respect thereto. The clutch plate 3 and the retaining plate 4 are fixed to each other at the outer circumferential portions by stopper pins 11. The stopper pins 11 extend through the outer cutaways 5c formed in the sub-plates 5. A predetermined gap is defined in the circumferential direction between the stopper pins 11 and the outer cutaways 5c. Therefore, the plates 3 and 4 are able to undergo limited relative rotary displacement with respect to the sub-plate 5.

A frictional coupling portion 10 is arranged at the outer circumference of the clutch disc 3. The frictional coupling portion 10 is mainly composed of an annular cushioning plate 12 and frictional facings 13. An annular portion 12a of the cushioning plate 12 is fixed to the clutch plate 3 by the stopper pins 11. A plurality of cushioning portions 12b are formed on the outer circumferential side of the cushioning plate 12. The friction facings 13 are fixed to both side surfaces of the cushioning portions 12b. Incidentally, a flywheel (not shown) on the engine side is disposed on the left (in Fig. 1) of the frictional facings 13. When the friction facings 13 are pressed against the flywheel by a pressure plate (not shown), the torque on the engine side is inputted to the clutch disc assembly 1.

Window holes 3a and 4a are formed in the clutch plate 3 and the retaining plate 4, respectively, corresponding to the window holes 5b of the sub-plate 5. The large coil springs 7 are disposed within the window holes 3a and 4a. Retainer portions 3b and 4b which are cut axially outwardly are formed on both sides in the radial direction of each window hole 3a, 4a.

A large coil spring is disposed in each corresponding window hole 5b, therefore there are four large coil springs 7 are provided in total. A small coil spring 8 is disposed within each large coil spring 7. The springs 7 and 8 are contacted at both ends in the circumferential direction with both ends in the circumferential direction of the window holes 5b, 3a and 4a.

The large coil springs 7 described above are limited in movement in the radially outward direction and in the axial direction by the retainer portions 3b of the clutch plate 3 and the retainer portions 4b of the retaining plate 4.

Four holes 3c and 4c to be engaged with parts of the friction resistance generating mechanism 8, as is described below, are formed at an equal interval in the circumferential direction on the inner circumferential side of the clutch plate 3 and the retaining plate 4.

The friction resistance generating mechanism 8 will now be described.

The friction resistance generating mechanism 8 is includes several annular members disposed, in the axial direction, between an inner circumferential portion of the clutch plate 3 and an inner circumferential portion of the retaining plate 4 on the outer circumferential side of the boss 2a. The friction resistance generating mechanism 8 includes a first friction washer 14, a second friction washer 15, a first conical spring 16, a second conical spring 17 and a third friction washer 18.

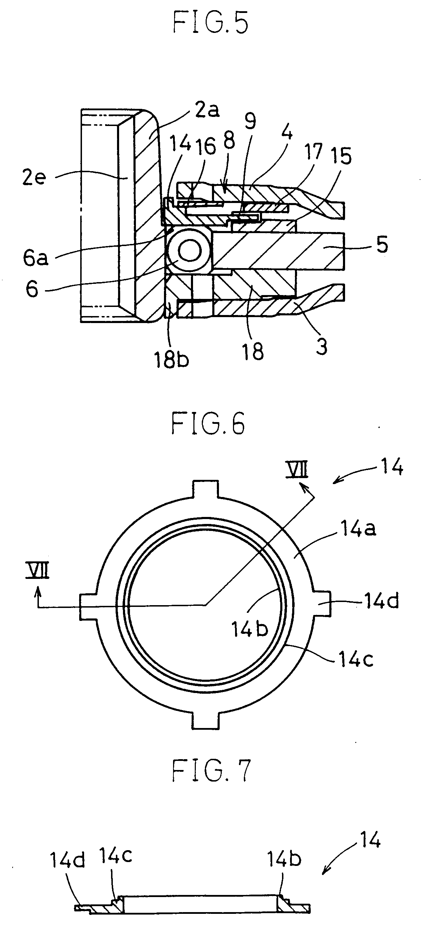

The first friction washer 14 is in the form of a disc-like plate made of resin. As shown in Figs. 5 to 7, the first friction washer 14 has an inner circumferential edge close to the boss 2a and a side surface in contact with the flange 2b of the hub 2. The first friction washer 14 has a disc portion 14a and an annular projection 14b extending from the inner circumference of the disc portion 14a to the transmission side. An annular cutaway groove 14c is formed in the annular projection 14b on the transmission side. Four projections 14d are formed to extend radially outwardly from the outer circumference of the disc portion 14a.

The first conical spring 16 is disposed in the axial direction between the first friction washer 14 and the retaining plate 4. The first conical spring 16 has an outer circumferential edge supported by the retaining plate 4 and an inner circumferential edge in contact with the annular cutaway groove 14c formed in the annular projection 14b of the first friction washer 14. The first conical spring 16 is installed in a compressed condition to urge the first friction washer 14 toward the flange 2b of the hub 2. A plurality of cutaways are formed on the outer circumferential side of the first conical spring 16. The cutaways of the first friction spring 16 are formed for the purpose of reducing the change in spring force of the first conical spring 16 when the position or posture of the first conical spring 16 is changed due to the wear of the first friction washer 14.

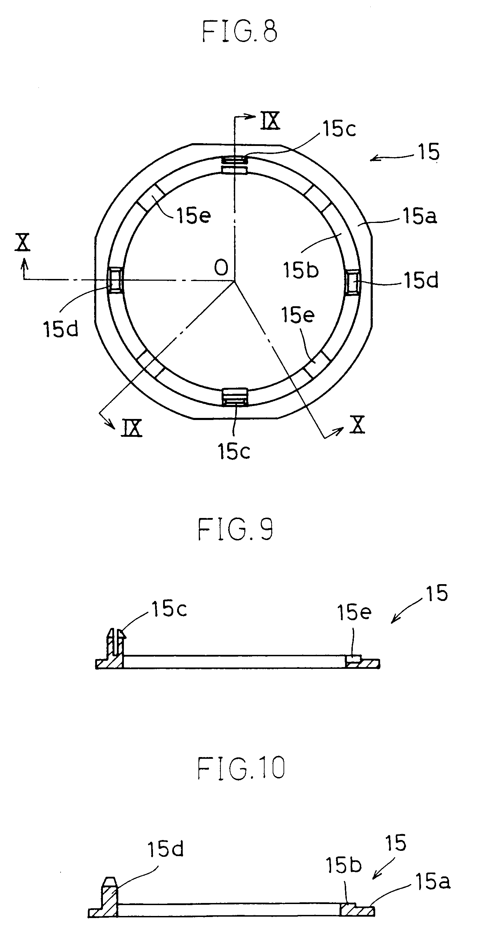

As is apparent from Figs. 8 to 10, the second friction washer 15 is formed into a disc-like member and is coaxially disposed with respect to the first washer 14 and substantially flush with a plane where the first friction washer 14. The second friction washer 15 is composed of a disc portion 15a and an annular projection 15b projecting toward the transmission on the inner circumferential side of the disc portion 15a. A side surface of the disc portion 15a on the engine side is in contact with the inner circumferential edge surface of the sub-plate 5. Four cutaways 15e are formed at an equal interval in the circumferential direction on the end face, on the transmission side, of the disc portion 15b. The projections 14d of the first friction washer 14 are engaged not to be rotatable in the circumferential direction relative to the cutaways 15e but to be movable in the axial direction within the cutaways 15e. A predetermined gap is kept in the axial direction between the projections 14d and the recesses or cutaways 15e. Four projections that extend on the transmission side are formed between the recesses 15e on the annular projection 15b. The projections are formed of two snap projections 15c and two rod-like projections 15d. The same kinds of projections are disposed to face each other diametrically. Each of the snap projections 15c is split into halves by a slit extending in the axial direction and has hook-shaped snaps at its tip end. The snap projection 15c is inserted into a hole 4c formed in the retaining plate 4 and therefore the second friction washer 15 is retained for rotation with the retaining plate 4. Snap portions formed in the snap projections 15c partially refrain the second friction washer 15 from axial movement. The rod-like projections 15d are also inserted into the holes 4c of the retaining plate 4.

The second conical spring 17 is disposed in the axial direction between the second friction washer 15 and the retaining plate 4. A plurality of cutaways are formed in the second conical spring 17. The cutaways of the second friction spring 17 are formed for the purpose of reducing the change in spring force of the second conical spring when the position or posture of the second conical spring 17 is changed due to the wear of the second friction washer 15. The second conical spring 17 is installed in a compressed condition. The outer circumferential edge of the second conical spring 17 is in contact with the retaining plate 4. The inner circumferential edge, i.e., projection 17b is in contact with the side surface on the transmission side of the annular projection 15b of the friction washer 15. Thus, the second conical spring 17 urges the second friction washer 15 toward the side surface on the transmission side of the sub-plate 5. At this time, the biasing force of the second conical spring 17 is set to be larger than the biasing force of the first conical spring 16. Incidentally, cutaway 17a portions of the second conical spring 17 correspond to the snap projections 15c, the rod-like projections 15d and the recesses 15e of the second friction washer 15 so as not to interfere with each other.

The third friction washer 18 is disposed in the axial direction between the inner circumferential portion of the clutch plate 3 and the inner circumferential edges of the flange 2b of the hub 2 and the sub-plate 5. The side surfaces on the transmission side of the third friction washer 18 are in contact with the side surface of the flange 2b and the inner edge side surface of the sub-plate 5 whereas the side surface on the engine side is in contact with the clutch plate 3. Snap projections 18a (see Fig. 1) extending in the axial direction on the engine side are formed on the outer circumferential portion of the third friction washer 18. The snap projections 18a are engaged with holes 3c formed in the clutch plate 3. The snap projections 18a have the same shape as that of the snap projections 15c of the above-described second friction washer 15. An annular projection 18b that extends in the axial direction on the engine side is formed on the inner circumferential portion of the third friction washer 18. The inner circumferential edge of the clutch plate 3 is engaged on the outer circumferential side of the annular projection 18b.

The operation of the clutch disc assembly 1 will now be described.

When the friction facings 13 are pressed against the flywheel (not shown) on the engine side, a torque of the flywheel on the engine side is fed to the clutch plate 3 and the retaining plate 4. The torque is transmitted through the large coil springs 7, the coil springs 8, the sub-plate 5 and the small coil springs 6 to the hub 2 and is further transmitted to the shaft (not shown) on the transmission side.

When a twist vibration is transmitted from the flywheel (not shown) on the engine side to the clutch disc assembly 1, a periodically relative rotation is generated between the plates 3 and 4 and the hub 2. The respective springs 6 to 8 are compressed and the friction is generated by the friction resistance generating mechanism 8. At this time, a hysteresis is generated by the relationship between the twist angle and the twist torque.

In the range of the small twist angle, the small springs 6 are compressed in the circumferential direction. The first friction washer 14 and the third friction washer 18 undergo sliding movement relative to the flange 2b of the hub 2. The twist vibration having a small shift angle is effectively attenuated by the characteristics of low rigidity/low hysteresis torque.

In the range of the large twist angle, the small coil springs 6 are compressed so that the sub-plate 5 and the hub 2 are rotated together. A relative rotation is generated between these components and the plates 3 and 4. At this time, the large coil spring 7 and the coil spring 8 are compressed. The first friction washer 14 undergoes sliding movement together with the flange 2b of the hub 2. The second friction washer 15 undergoes sliding movement along or on the inner circumferential side surface of the sub-plate 5. Furthermore, the third friction washer 18 undergoes sliding movement on the side surface on the flywheel side of the flange 2 of the hub 2 and the side surface on the flay wheel side on the inner circumferential side of the sub-plate 5. Here, since the biasing force of the second conical spring 17 is set to be larger than the biasing force of the first conical spring 16, a large friction is generated. The twist vibration having a large shift angle is effectively attenuated by the characteristics of high rigidity/high hysteresis torque.

As described above, since suitable characteristics may be obtained in accordance with a kind of twist vibrations, the clutch disc assembly 1 is effective in attenuating the twist vibration.

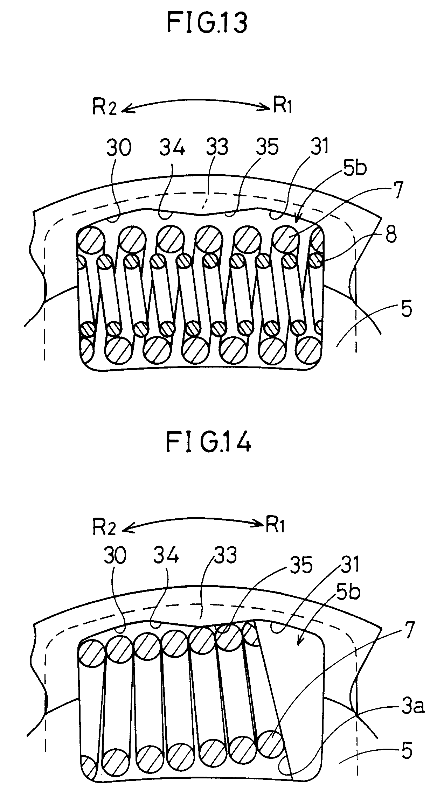

The compression operation of the large coil springs 7 will now be described with reference to Figs. 11 and 12. Incidentally, for the sake of simplification, the coil spring 8 is not depicted in Fig. 12. Here, it is assumed that the sub-plate 5 is fixed whereas the plates 3 and 4 are twisted relative to the sub-plate 5. When the plates 3 and 4 are twisted on the R2 side, the large coil springs 7 are compressed by the side edges on the R1 side of the window holes 3a and 4a. As is apparent from Fig. 12, the large coil springs 7 are contacted at outer circumferential portions with the linear edge 32 of the window holes 5b. In other words, the deflection of the large coil springs 7 in the radially outward direction is limited. Also, the movement in the radially outward direction of the large coil springs 7 caused by the centrifugal force is limited by the linear edge 32. As a result, it is possible to obtain desired twist characteristics by the large coil springs 7.

The present invention is particularly effective in the case where the coil springs are long and liable to be too deflected and to be readily moved by the centrifugal force.

### Alternate Embodiments

Modifications to the window holes 5b will now be described with reference to Figs. 13 and 14.
(a) Arcuate edges 30 and 31 are formed on both sides in the circumferential direction of the outer edge of the window hole 5b. A projection 33 is formed between the arcuate edges 30 and 31. The projection 33 is in the form of a mountain having a width decreased gradually from both sides of the circumferential direction to the center and has slant edges 34 and 35. When the plates 3 and 4 are twisted on the R2 side, the coil spring 7 is compressed gradually by the R1 side edges of the window holes 3a and 4a. As is apparent from Fig. 14, the outer circumferential portion of the large coil spring 7 is brought into contact with the slant edge 35 of the projection of the window hole 5b. The deflection in the radially outward direction of the large coil spring 7 is limited. Also, the movement in the radially outward direction of the large coil spring 7 by the centrifugal force is limited by the slant surface 35. As a result, it is possible to obtain desired twist characteristics by the large coil spring 7.
(b) The shape of the above-described window hole may be applied to the window hole of the clutch plate or the retaining plate. Also, it is possible to apply the invention to the window holes of the flange which is integral with the hub. Furthermore, it is possible to apply the invention to damper mechanisms such as a lockup clutch of the torque convertor or the flywheel assembly.

Various details of the invention may be changed without departing from its spirit nor its scope. Furthermore, the foregoing description of the embodiments according to the present invention is provided for the purpose of illustration only, and not for the purpose of limiting the invention as defined by the appended claims and their equivalents.

## Claims

1. A damper disc assembly for use in a torque transmitting device, comprising:
a first plate member having a first window hole formed therein;
a sub-plate sub-plate formed with a second window hole, said second window hole being formed in a circumferentially intermediate portion thereof with a spring deflection limiting portion; and
an elastic member disposed in said first window hole and said second window hole elastically coupling said first plate member and said sub-plate, wherein in response to relative rotational displacement between said first plate and said sub-plate said elastic member is compressed and said spring deflection limiting portion limits radially outward deflection of said elastic member.

2. The damper disc assembly plate member according to claim 1, wherein a radial outer portion of said second window hole is formed with arcuate edges adjacent to each opposing circumferential end thereof, and said deflection limiting portion is formed between said arcuate edges.

3. The damper disc assembly plate member according to claim 2, wherein said deflection limiting portion is a linear edge of said second window hole extending between said arcuate edges.

4. The damper disc assembly plate member according to claim 2, wherein said deflection limiting portion is a radially inwardly extending projection which is formed between said arcuate edges.

5. The damper disc assembly plate member according to claim 4, wherein a width of said projection gradually decreases from said arcuate edges toward a center thereof.

6. The damper disc assembly damper disc assembly according to claim 1 further comprising:
a second plate member disposed adjacent to said sub-plate such that said first plate member and said second plate member are on opposite sides of said sub-plate, said second plate member formed with a third window hole therein, said elatic member extending into said third window hole elastically coupling said second plate member and said sub-plate.
